# EUROPEAN PATENT SPECIFICATION

(11) **EP 0 335 018 B1**
(45) Date of publication and mention of the grant of the patent: **18.08.1993**
(21) Application number: 88302791.4
(22) Date of filing: 29.03.1988
(51) Int. Cl.: B64D 11/06

(54) **Armrest arrangements for vehicle seating**
Armlehnenanordnung für einen Fahrzeugsitz
Assemblage d'accoudoir pour siège de véhicule

(43) Date of publication of application: 04.10.1989
(73) Proprietor: FLIGHT EQUIPMENT & ENGINEERING LIMITED, Leighton Buzzard, Bedfordshire, LU7 8TB (GB)
(72) Inventor: Wain, Nicholas David, High Wycombe Buckinghamshire, HP13 5UE (GB); Shepheard, Godfrey John, Leighton Buzzard Bedfordshire, LU7 0SX (GB)
(74) Representative: Lishman, Peter David

(56) References cited:
- US-A- 3 374 032
- US-A- 3 877 747
- US-A- 4 533 175
- US-A- 4 536 027

## Description

In passenger-carrying vehicles, particularly aircraft, it is common to provide seats of different widths for passengers travelling on different classes of fare. For example, a seat provided for passengers travelling "First Class" is usually wider (and designed to provide greater comfort) than a seat provided for passengers travelling on the "Tourist Class" fare. Seats of different widths are also desirable to provide improved comfort for different sizes of passenger.

Vehicles are commonly used to transport passengers travelling on different classes of fare. The numbers of passengers travelling on the different classes is likely to vary from one journey to another. It is therefore a common practice to provide an adjustable seating unit comprising at least one backrest part and at least one bottom part for a plurality of seats abreast, fixed armrests at the sides of the unit and laterally-movable intermediate armrests defining and separating the seats. The intermediate armrests are movable laterally so that the width of the seats can be adjusted, for example between journeys, to accommodate passengers in different fare classes. This invention concerns armrest arrangements for adjustable seating units of this kind for use in passenger-carrying vehicles, which will for convenience be referred to as "adjustable seating units of the kind described".

In its simplest form, an adjustable seating unit of the kind described comprises a backrest part and a bottom part for two seats abreast, with a fixed armrest at each side and two intermediate armrests, each seat being defined by an intermediate armrest and the adjacent fixed armrest and the two seats being separated by the two intermediate armrests. Each intermediate armrest can be moved laterally between two or more predetermined positions to define seats of different widths.

Typically, a "First Class" seat for an aircraft has an overall width up to about one-and-a-half times the width of a "Tourist Class" seat. It is therefore convenient to make an adjustable seating unit of the kind described of overall width sufficient to provide a row of three seats abreast for "Tourist Class" passengers. Such a unit can be adjusted readily to provide two wider seats abreast for "First Class" passengers. Two intermediate armrests are provided, each of which can be located in two alternative laterally-spaced positions. In the first position, all four armrests are equally spaced, defining seats for three "Tourist Class" passengers. In the second position, the two intermediate armrests are each located closer to the centre of the row so as to define with the fixed armrests two wider seats for "First Class" passengers. In one such arrangement, disclosed in U.S. Patent Specification No. 3,145,052, each intermediate armrest is supported by a tubular strut which can be inserted selectively into either of two laterally-spaced sockets in the alternative positions. A disadvantage of this arrangement is that the intermediate armrests can readily be removed from the unit and may be lost.

European Patent Application No. 0 227 239 discloses an adjustable seating unit of the kind described in which each intermediate armrest is anchored to a fixed part of the seating unit by a linkage and complementary components are provided on the intermediate armrests and the seating unit for selective engagement to locate the intermediate armrests positively in their respective positions. This avoids loss of the intermediate armrests.

It has been proposed to provide, for an adjustable seating unit of the kind described in US-A-3,145,052, a separate shroud to fit on or over two intermediate armrests when they are positioned close together between wider seats, to improve the appearance of the unit and to provide a tray or console on or in which passengers may keep articles which they use during a journey. This proposal has not found favour because the shroud, when not in use, must be stored in the aircraft and is likely to be misplaced or damaged.

U.S. Patent Specification No. 4,533,175 discloses an adjustable seating unit which provides either two wider seats or three narrower seats abreast. There are fixed armrests at the sides of the unit and intermediate armrests are provided which are movable between two positions. In the three-seat configuration the intermediate armrests project vertically out of the lower seat cushion to define and separate three seats of equal width. In the two-seat configuration the intermediate armrests are pivoted down to overlie the centre seat position in a generally horizontal fashion and the centre part of the back cushion is swung down to form an alternative wider armrest and/or cocktail table to separate and define the two wider seats.

According to this invention, an adjustable seating unit of the kind described for use in a passenger-carrying vehicle, including a shroud, movable between an operative position in which it fits on or over two intermediate armrests when they are positioned close together between wider seats and a stored position, is characterised in that the shroud is anchored to the seating unit.

Preferably the shroud can be concealed at least partially, when in its stored position, by a portion of the seating unit which is movable to permit the shroud to move between its operative and stored positions.

Being anchored to the seating unit, the shroud cannot be misplaced or lost. Preferably, the shroud is mounted on arms pivotally connected to the seating unit.

The portion of the seating unit by which the shroud is concealed in its stored position may be a backrest part or a bottom part or a portion of one of those parts. The shroud may have recesses in its surface which will be uppermost when it is in its operative position, to receive articles which a passenger may require during a journey or it may include facilities which are required to be available to passengers only when the wider seats are available for use, such as the control for a recline mechanism or a socket for audio or other facilities. Its said surface may also include padded areas to provide increased comfort for passengers.

Embodiments of the invention are illustrated by way of example by the accompanying drawings, in which :
- Figure 1: is a perspective view, from the front and one side, of part of an adjustable seating unit of the kind described,
- Figure 2: is a plan view of the middle part of the seating unit, partly sectioned on the line A-A in Figure 1, and
- Figure 3: is a perspective view, from the front and one side, of part of a different adjustable seating unit of the kind described.

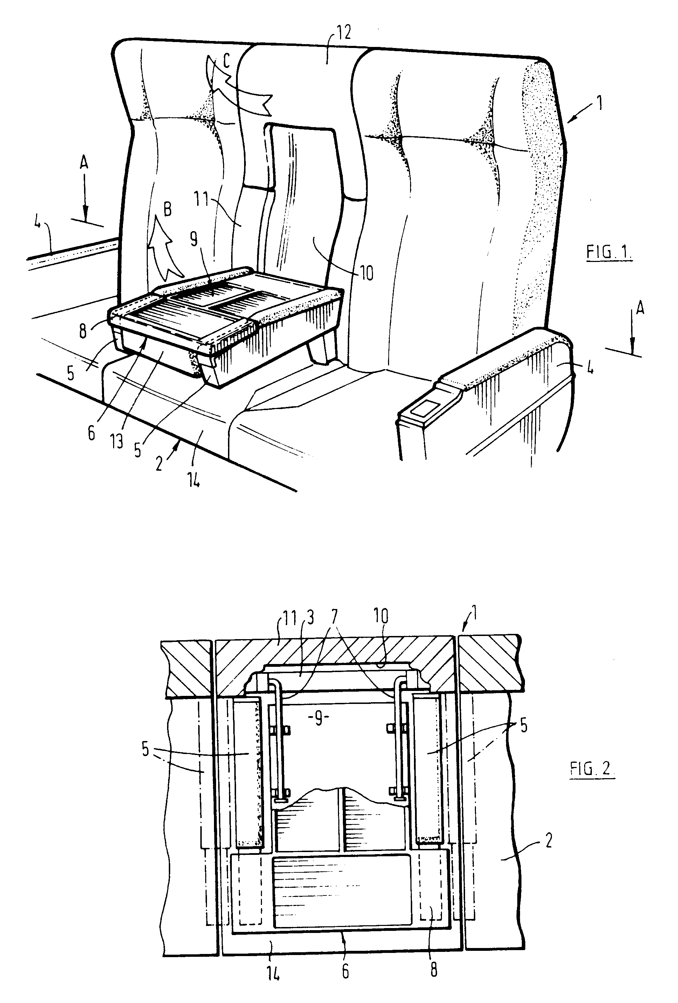

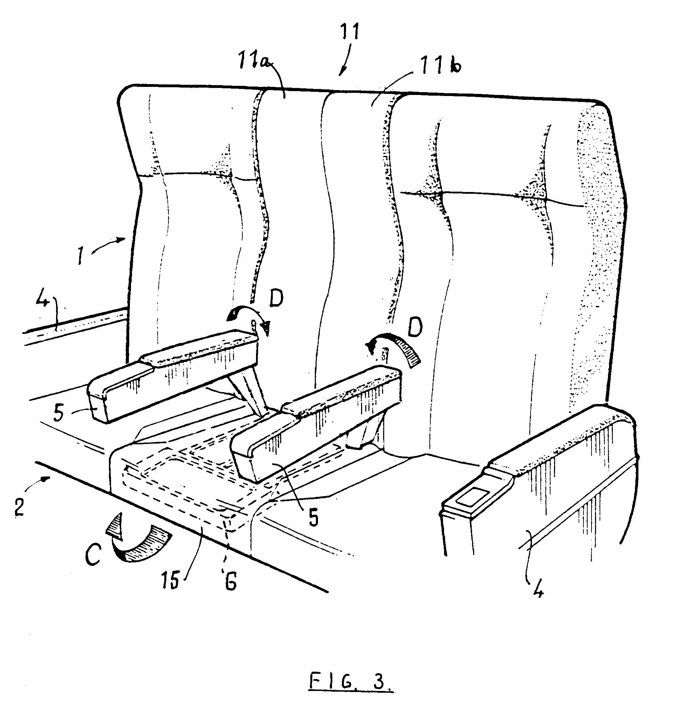

Referring first to the embodiment shown in Figures 1 and 2, the adjustable seating unit comprises a backrest part 1 and a bottom part 2, mounted in the usual manner on a supporting frame 3 (partly shown in Figure 2) to be mounted in a vehicle such as an aircraft. Each of the parts 1 and 2 is of overall width sufficient to provide a row of three seats abreast for "Tourist Class" passengers and is divided into three separate elements, each of width appropriate for one of these seats. Fixed armrests 4 are mounted at the sides of the unit and two movable intermediate armrests 5 are provided, each of which can be located in two alternative positions, as shown in Figure 2. In their first positions, shown in chain dotted lines, they are spaced equally from the fixed armrests 4 and from each other so as to define and separate the three seats. In their second positions, shown in full lines (the position in which they are shown in Figure 1), they define with the respective fixed armrests 4 two wider "First Class" seats and have a narrower space between them. To cover this space and give a neat appearance, a shroud 6 is slidably mounted on arms 7 pivoted to a part of the frame 3 of the unit. In its operative position shown, the shroud 6 fits on the intermediate armrests 5. It is of T shape in plan, with a wider part 8 which rests on and fits over the front parts of the intermediate armrests 5 when they are in their second positions and a narrower part 9 which lies between their upholstered rear parts. Its upper surface is recessed to receive articles which passengers may wish to keep conveniently at hand during a journey.

From its operative position shown in Figure 1, the shroud 6 may be swung upwardly, as indicated by the arrow B in Figure 1, to a stored position in a recess 10 in the middle element 11 of the backrest part 1. A portion 12 of the upholstery of the middle element 11 which covers the upper side portions of the recess 10 is hinged at or near its top edge so that it can be raised, as indicated by the arrow C in Figure 1, to reveal the whole recess 10. As the shroud 6 is swung upwardly, it is slid inwardly along the arms 7 to allow its wider part 8 to enter the recess 10 behind the upholstery portion 12, which can then be restored to the position shown so as to conceal the outer ends of the wider part 8 of the shroud. On the lower surface of the shroud 6, which is outermost when it is in its stored position, is mounted a portion of upholstery 13 to fit in the recess 10 below the portion 12 so as to continue the seating surface of the backrest when the shroud is in its stored position. The shroud is then completely concealed behind the backrest seating surface.

When it is desired to convert the seating unit from the two-seat "First Class" configuration shown in Figure 1 to the three-seat "Tourist Class" configuration, it is a simple matter to raise the upholstery portion 12 and swing the shroud 6 upwardly and slide it inwardly along the arms 7 so that it enters the recess 10, restore the upholstery portion 12 and then move the intermediate armrests 5 outwardly to their first positions. Conversion in the opposite direction is equally simple. The shroud cannot be separated from the unit.

Figure 3 shows an alternative embodiment which, whilst generally similar to the embodiment of Figures 1 and 2, has a different arrangement for storage of the shroud. The parts 1 to 6, 8 and 9 are generally similar to those of the previous embodiment and are indicated by the same reference numbers. In this embodiment, the middle element 15 of the bottom part 2 of the seating unit is removable. The shroud 6 is mounted on articulated arms (not shown) which are pivoted to the frame 3 like the arms 7 in Figure 1 so that it can be lowered when the element 15 is removed and the intermediate armrests 5 are in their first positions in which the space between them is sufficient for the wider part 8 of the shroud to pass. The shroud will then rest in a stored position as shown on a part of the frame 3 and the element 15 can be replaced over it so that the unit provides three "Tourist Class" seats of equal width and the shroud is completely concealed. To convert the seating unit to the two-seat configuration, the element 15 is removed and the shroud 6 is lifted above the intermediate armrests 5 as indicated by the arrow C. The element 15 is replaced below the shroud and the intermediate armrests 5 are moved to their second positions as indicated by the arrows D. The shroud can then be lowered to rest on the intermediate armrests 5 just as shown in Figure 1. In this alternative embodiment, the middle element 11 of the backrest part 1 is not recessed so the unit has a neater appearance in the two-seat configuration than the embodiment of Figures 1 and 2. Furthermore, it may be divided centrally into two portions, 11a and 11b, which can be connected in known manner by internal bolts (not shown) to the respective outer elements 16 of the backrest part 1 so as to form effective wider independent backrests for the wider seats. No upholstery is necessary on the underside of the shroud 5 so it occupies less space in the stored position and is easily accommodated below the element 15. If desired, the element 15 may be hinged to the frame at or near its front edge instead of being removable.

In both embodiments illustrated and in other embodiments of the invention, the intermediate armrests 5 may be, and preferably are, anchored to the seating unit by linkages and complementary components are provided on the intermediate armrests and on the seating unit for selective engagement to locate the intermediate armrests positively in their respective positions, as described in European Patent Application No. 0 227 239.

## Claims

1. An adjustable seating unit, for use in a passenger-carrying vehicle, comprising at least one backrest part (1) and at least one bottom part (2) for a plurality of seats abreast, fixed armrests (4) at the sides of the unit and laterally-movable intermediate armrests (5) defining and separating the seats and movable laterally so that the width of the seats can be adjusted, including a shroud (6), movable between an operative position in which it fits on or over two intermediate armrests (5) when they are positioned close together between wider seats and a stored position, characterised in that the shroud (6) is anchored to the seating unit.

2. An adjustable seating unit as claimed in Claim 1, characterised in that the shroud (6) can be concealed at least partially, when in its stored position, by a portion (12), (15) of the seating unit which is movable to permit the shroud (6) to move between its operative and stored positions.

3. An adjustable seating unit as claimed in Claim 1 or Claim 2, characterised in that the shroud (6) is mounted on arms (7) pivotally connected to the seating unit.

4. An adjustable seating unit as claimed in Claim 3, characterised in that the shroud (6) is slidably mounted on the arms (7).

5. An adjustable seating unit as claimed in Claim 3 or Claim 4, characterised in that the arms are articulated.

6. An adjustable seating unit as claimed in any of Claims 2 to 5, characterised in that the shroud (6) can be concealed at least partially by a portion (12) of the backrest part (1).

7. An adjustable seating unit as claimed in Claim 6, characterised in that the shroud (6) carries on its surface which will be outermost in its stored position a portion (13) of upholstery to form a continuation of a seating surface of the unit and to complete concealment of the shroud (6) in its stored position.

8. An adjustable seating unit as claimed in any of Claims 2 to 5, characterised in that the shroud (6) can be concealed at least partially by a portion (15) of the bottom part (2).

9. An adjustable seating unit as claimed in any preceding claim characterised in that the shroud (6) includes a facility which is required to be available only when the wider seats are available.

## Patentansprüche

1. Einstellbare Sitzeinheit zur Verwendung in einem Passagiere befördernden Fahrzeug, mit wenigstens einem Rückenlehnenteil (1) und wenigstens einem Unterteil (2) für mehrere Seite an Seite angeordnete Sitze, mit feststehenden Armlehnen (4) an den Seiten der Einheit und mit seitlich bewegbaren Zwischenarmlehnen (5), die die Sitze begrenzen und abtrennen und so seitlich bewegbar sind, daß die Breite der Sitze eingestellt werden kann, wobei eine Abdeckung (6) vorgesehen ist, die zwischen einer Aktivstellung, in der sie auf oder über zwei Zwischenarmlehnen (5) angebracht ist, wenn sie zwischen zwei breiteren Sitzen nahe beieinander angeordnet sind, und einer Aufbewahrungsstellung bewegbar ist, dadurch gekennzeichnet, daß die Abdekkung (6) an der Sitzeinheit verankert ist.

2. Einstellbare Sitzeinheit nach Anspruch 1, dadurch gekennzeichnet, daß die Abdeckung (6) in ihrer Aufbewahrungsstellung wenigstens teilweise durch einen Abschnitt (12, 15) der Sitzeinheit verdeckt werden kann, der bewegbar ist, damit die Abdeckung (6) sich zwischen ihrer Aktiv- und Aufbewahrungsstellung bewegen kann.

3. Einstellbare Sitzeinheit nach Anspruch 1 oder Anspruch 2, dadurch gekennzeichnet, daß die Abdeckung (6) an Hebeln (7) angebracht ist, die schwenkbar mit der Sitzeinheit verbunden sind.

4. Einstellbare Sitzeinheit nach Anspruch 3, dadurch gekennzeichnet, daß die Abdeckung (6) gleitend verschiebbar an den Hebeln (7) angebracht ist.

5. Einstellbare Sitzeinheit nach Anspruch 3 oder Anspruch 4, dadurch gekennzeichnet, daß die Hebel gelenkig gelagert sind.

6. Einstellbare Sitzeinheit nach einem der Ansprüche 2 bis 5, dadurch gekennzeichnet, daß die Abdeckung (6) wenigstens teilweise durch einen Abschnitt (12) des Rückenlehnenteils (1) verdeckt werden kann.

7. Einstellbare Sitzeinheit nach Anspruch 6, dadurch gekennzeichnet, daß die Abdeckung (6) an ihrer in der Aufbewahrungsstellung äußersten Fläche einen Polsterabschnitt (13) trägt, um eine Fortsetzung einer Sitzfläche der Einheit zu bilden und die Verdeckung der Abdeckung (6) in ihrer Aufbewahrungsstellung zu vervollständigen.

8. Einstellbare Sitzeinheit nach einem der Ansprüche 2 bis 5, dadurch gekennzeichnet, daß die Abdeckung (6) wenigstens teilweise durch einen Abschnitt (15) des Unterteils (2) verdeckt werden kann.

9. Einstellbare Sitzeinheit nach einem vorhergehenden Anspruch, dadurch gekennzeichnet, daß die Abdeckung (6) eine Einrichtung enthält, die nur dann zur Verfügung stehen muß, wenn die breiteren Sitze zur Verfügung stehen.

## Revendications

1. Ensemble réglable à sièges destiné à être utilisé dans un véhicule de transport de passagers, comprenant au moins une partie (1) de dossier et au moins une partie (2) d'assise destinées à plusieurs sièges disposés côte à côte, des accoudoirs fixes (4) placés sur les côtés de l'ensemble et des accoudoirs intermédiaires (5) mobiles latéralement et délimitant les sièges, ces accoudoirs intermédiaires étant mobiles latéralement afin que la largeur des sièges puisse être ajustée, l'ensemble comprenant un capot (6) qui est mobile entre une position de travail dans laquelle il s'ajuste sur deux accoudoirs intermédiaires (5) lorsqu'ils sont relativement proches l'un de l'autre entre des sièges relativement larges, et une position rangée, caractérisé en ce que le capot (6) est fixé à l'ensemble à sièges.

2. Ensemble réglable à sièges selon la revendication 1, caractérisé en ce que le capot (6) peut être caché au moins en partie lorsqu'il est en position rangée, par une partie (12, 15) de l'ensemble à sièges qui est mobile afin que le capot (6) puisse se déplacer entre ses positions de travail et rangée.

3. Ensemble réglable à sièges selon la revendication 1 ou 2, caractérisé en ce que le capot (6) est monté sur des bras (7) articulés sur l'ensemble à sièges.

4. Ensemble réglable à sièges selon la revendication 3, caractérisé en ce que le capot (6) est monté afin qu'il puisse coulisser sur les bras (7).

5. Ensemble réglable à sièges selon la revendication 3 ou 4, caractérisé en ce que les bras sont articulés.

6. Ensemble réglable à sièges selon l'une quelconque des revendications 2 à 5, caractérisé en ce que le capot (6) peut être caché au moins partiellement par une partie (12) de la partie de dossier (1).

7. Ensemble réglable à sièges selon la revendication 6, caractérisé en ce que le capot (6) porte, à sa surface qui est la plus à l'extérieur en position rangée, une partie (13) de rembourrage destinée à former un prolongement de la surface de l'ensemble à sièges et à participer à l'obturation du capot (6) dans sa position rangée.

8. Ensemble réglable à sièges selon l'une quelconque des revendications 2 à 5, caractérisé en ce que le capot (6) peut être caché au moins partiellement par une partie (15) de la partie d'assise (2).

9. Ensemble réglable à sièges selon l'une quelconque des revendications précédentes, caractérisé en ce que le capot (6) comporte un accessoire qui doit être disponible uniquement lorsque les sièges relativement larges sont disponibles.
